# EUROPEAN PATENT APPLICATION

(11) **EP 4 542 205 A1**
(43) Date of publication of application: **23.04.2025**
(21) Application number: 23903968.8
(22) Date of filing: 12.12.2023
(51) Int. Cl.: G01N 21/88, G01N 21/952, B23K 31/12

(54) **BATTERY INSPECTION DEVICE**

(30) Priority: 12.12.2022 KR 20220173077; 05.12.2023 KR 20230174956
(71) Applicant: LG Energy Solution, Ltd., Seoul 07335 (KR)
(72) Inventor: KIM, Ji-Won, Daejeon 34122 (KR); KIM, Tae-Young, Daejeon 34122 (KR)
(74) Representative: Goddar, Heinz J.
(86) International application number: PCT/KR2023/020453
(87) International publication number: WO 2024/128766

(57) **Abstract**

A battery inspection device according to the present disclosure may include: an upper inspection unit including a first lens module configured to condense first light and a first camera mounted on the top of the first lens module; a lower inspection unit disposed horizontally to be spaced apart from the first lens module and including a second lens module configured to condense second light incident from an inspection object and a second camera mounted on the top of the second lens module; and a light-path guide unit integrally coupled to the first lens module and the second lens module and configured to split incident light incident from the inspection object into the first light and the second light, guide the first light to the first lens module, and guide the second light to the first lens module.

## Description

### TECHNICAL FIELD

The present disclosure relates to a device for inspecting battery quality in the battery production process, and more specifically, it relates to an inspection device for inspecting the quality of welded or assembled areas.

The present application claims priority to Korean Patent Application No. 10-2022-0173077 filed on December 12, 2022 and Korean Patent Application No. 10-2023-0174956 filed on December 05, 2023 in the Republic of Korea, the disclosures of which are incorporated herein by reference.

### BACKGROUND ART

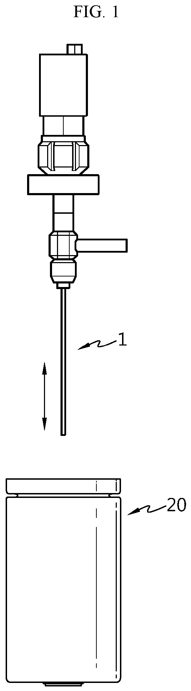

An existing inspection device for weld areas of a cylindrical battery, as shown in FIG. 1, inspects the lower weld area by inserting an endoscope lens 1 into the battery 20.

The inspection using the above method makes it difficult to respond to fast production line speeds due to limited ascending and descending speeds of the endoscope lens 1. In addition, insertion of the endoscope lens 1 into the battery 20 requires the product to stop at the inspection section in the battery production process.

There is also a problem with batteries and inspection devices being damaged when inserting the endoscope lens.

Accordingly, a new type of cylindrical-battery weld inspection device capable of inspecting defects occurring in the welding process with improved image quality is required to replace the endoscopic lens insertion-type inspection device that disrupts tact time and causes damage to the battery and inspection device.

### DISCLOSURE

### Technical Problem

The present disclosure has been designed to solve the problems of the related art, and therefore the present disclosure is directed to providing an inspection device capable of inspecting the battery quality without stopping the production line in the battery production process, eliminating the risk of damage to the product or inspection device during the battery inspection process, and more accurate inspection.

The present disclosure is also to provide an inspection device capable of simultaneously inspecting the upper weld area and appearance of the battery, as well as the lower weld area thereof.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery inspection device according to an aspect of the present disclosure may include: an upper inspection unit including a first lens module configured to condense first light and a first camera mounted on the top of the first lens module; a lower inspection unit disposed horizontally to be spaced apart from the first lens module and comprising a second lens module configured to condense second light and a second camera mounted on the top of the second lens module; and a light-path guide unit integrally coupled to the first lens module and the second lens module and configured to split incident light incident from an inspection object into the first light and the second light, guide the first light to the first lens module, and guide the second light to the first lens module.

The light-path guide unit may include: a beam splitter configured to split the incident light into the first light and the second light; and a reflective mirror configured to refract the first light toward the first lens module.

The light-path guide unit may include: a barrel configured in the shape of a box and having a passage through which the first light and the second light pass; a first lens connection hole provided on the top of the barrel and to which the first lens module is connected; a second lens connection hole provided on the top of the barrel and to which the second lens module is connected; and a light entrance provided on the bottom of the barrel and through which light enters and exits the barrel.

Inside the passage, the reflective mirror may be disposed vertically below the first lens connection hole and the beam splitter may be disposed vertically below the second lens connection hole, and the light entrance may be provided vertically below the beam splitter.

The light-path guide unit may include: a mirror support configured to support and hold the reflective mirror; a splitter support configured to support and hold the beam splitter; and slots through which the mirror support and the splitter support are inserted into the barrel from the outside.

The second lens module may include a telecentric lens.

The upper inspection unit may include a first lighting equipment coupled to the first lens module.

The first lighting equipment may be coaxial projection lighting equipment.

The lower inspection unit may include a second lighting equipment coupled to the second lens module.

The second lighting equipment may be parallel-light lighting equipment.

The lower inspection unit may include an aperture controller capable of controlling the amount of light entering the second lens module from the second lighting equipment.

The aperture controller may include: an aperture unit mounted to a lighting connection hole provided in the second lens module for connection of the second lighting equipment, and configured such that a cogwheel provided on the outer surface rotates clockwise or counterclockwise to gradually increase or reduce the diameter thereof, thereby adjusting the amount of light entering the lighting connection hole; a motor bracket coupled to the outer side of the second lens module; a drive motor fixed to the bracket; and a timing belt connected to the drive motor and the cogwheel.

### Advantageous Effects

According to one aspect of the present disclosure, it is possible to provide an inspection device capable of inspecting the battery quality without stopping the production line in the battery production process, eliminating the risk of damage to the product or inspection device during the battery inspection process, and more accurate inspection.

The present disclosure is able to simultaneously inspect the upper weld area of the battery, as well as the lower weld area thereof, thereby significantly reducing the tact time of the battery inspection process.

The effects obtainable from the present disclosure are not limited to the above-mentioned effects, and other effects not mentioned above will be clearly understood by those skilled in the art to which the present disclosure pertains from the description of the invention described below.

### DESCRIPTION OF DRAWINGS

FIG. 1 is a diagram schematically illustrating a battery inspection device according to the prior art.
FIG. 2 is a perspective view of a battery inspection device according to an embodiment of the present disclosure.
FIG. 3 is an exploded perspective view of the battery inspection device in FIG. 2.
FIG. 4 is a schematic cross-sectional view of the battery inspection device in FIG. 2.
FIG. 5 is a bottom view of the battery inspection device in FIG. 2.
FIG. 6 is a left side view of the battery inspection device in FIG. 2.
FIG. 7 is a front view of the battery inspection device in FIG. 2.
FIG. 8 is a right side view of the battery inspection device in FIG. 2.
FIG. 9 is a diagram illustrating an aperture controller of the battery inspection device in FIG. 2.
FIG. 10 is a cutaway view schematically illustrating a battery for inspection using a battery inspection device according to an embodiment of the present disclosure.
FIG. 11 is a diagram illustrating the light path for inspection of an upper area in the battery when photographing the upper area of the battery using an upper inspection unit according to an embodiment of the present disclosure.
FIG. 12 is a diagram illustrating the light path for inspection of a lower area in battery when photographing the lower area of the battery using a lower inspection unit according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

A battery inspection device according to the present disclosure may inspect the upper and lower areas of a battery during the battery production process to check for defects.

As will be described in detail later, the battery inspection device according to the present disclosure is configured to simultaneously obtain images of the upper and lower areas of a battery 20 while the battery 20 is moving in the battery production line and inspect the states of the upper and lower areas of the battery. Therefore, it is possible to inspect the battery quality without stopping the production line in the battery production process, thereby reducing the tact time of the battery production process according thereto. In addition, compared to the endoscopic inspection method described in the background above, the battery inspection device according to the present disclosure is configured to obtain an image of the lower area inside the battery from the outside of the battery, avoiding interference or collision between the battery inspection device and the battery.

Hereinafter, primary elements of the battery inspection device according to the present disclosure will be described in detail.

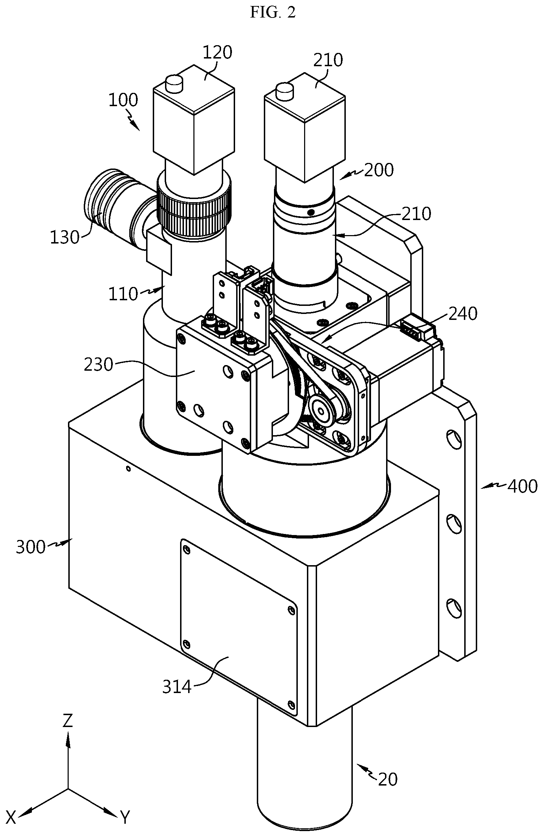

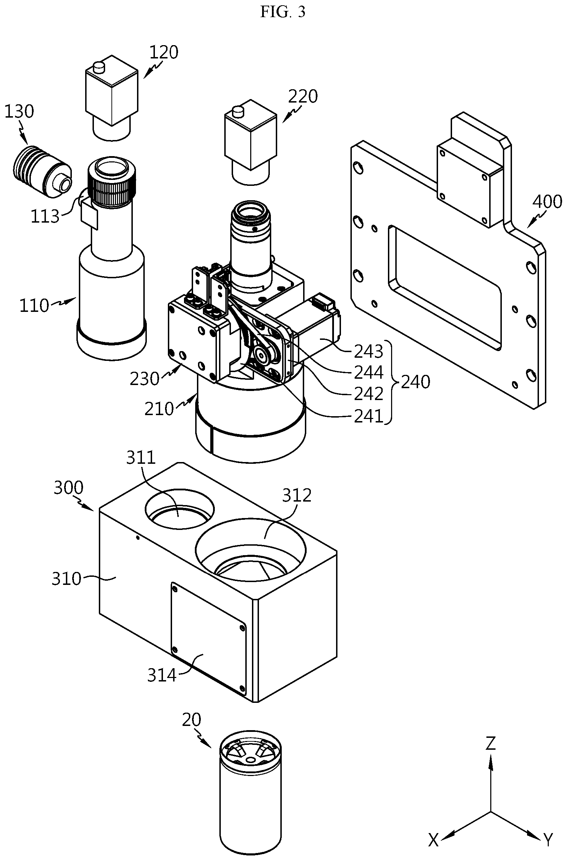

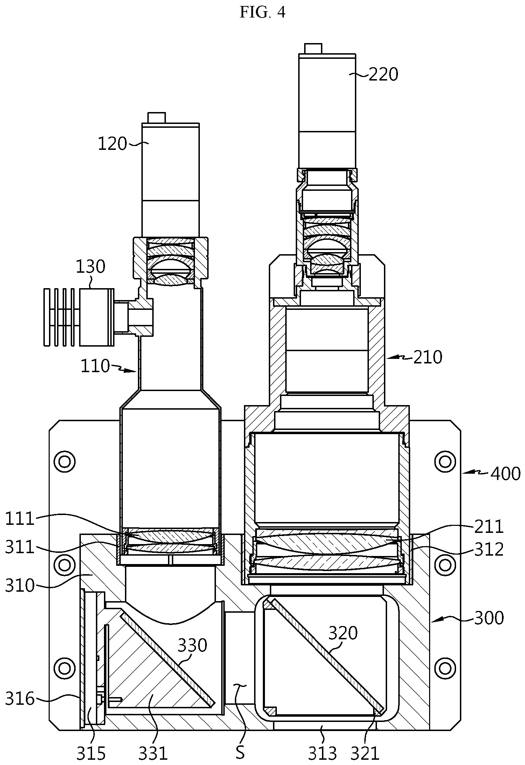

FIG. 2 is a perspective view of a battery inspection device according to an embodiment of the present disclosure, FIG. 3 is an exploded perspective view of the battery inspection device in FIG. 2, and FIG. 4 is a schematic cross-sectional view of the battery inspection device in FIG. 2.

As shown in FIGS. 2 to 4, the battery inspection device according to an embodiment of the present disclosure may include an upper inspection unit 100, a lower inspection unit 200, and a light-path guide unit 300.

The upper inspection unit 100 and the lower inspection unit 200 may be configured to photograph different portions of one inspection object. For example, the upper inspection unit 100 may be configured to photograph the upper area of the battery 20, which is the inspection object, and performing inspection for defects, and the lower inspection unit 200 may be configured to photograph the lower area inside the battery 20, which is the inspection object, and performing inspection for defects.

The upper inspection unit 100 may include a first lens module 110 to condense first light incident from the inspection object, and a first camera 120 that is detachably coupled to the first lens module 110. The first lens module 110 may include a substantially cylindrical barrel and at least one lens 111 inside the barrel.

The first camera 120 is a means for obtaining and storing images of the inspection object. In the present embodiment, the first camera 120 obtains and stores images of the upper weld area of the battery. The first camera 120 may be, for example, a CCD (Charge-Coupled Device) camera that uses a CCD as an image sensor to convert images into electrical signals and store digital data thereof in a storage medium such as flash memory.

The lower inspection unit 200 may include a second lens module 210 to condense second light incident from the inspection object, and a second camera 220 that is detachably coupled to the second lens module 210. The second lens module 210 may include a substantially cylindrical barrel and at least one lens 211 inside the barrel. In particular, in this embodiment, the lens constituting the second lens module 210 may be a telecentric lens. Here, the telecentric lens indicates a lens designed to bring parallel light, regardless of the parallel distance. Since this telecentric lens receives only the light parallel to the optical axis, there is no perspective error, so it is possible to more accurately inspect the weld thickness or the like, even it is the weld area in the lower area inside the battery.

Like the first camera 120, the second camera 220 is a means for obtaining and storing images of the inspection object and may be, for example, a CCD camera. However, the second camera 220 obtains and stores images of portions of the inspection object, which are different from those of the first camera 120. For example, in this embodiment, the first camera 120 obtains and stores an image of the upper area of the battery, and the second camera 220 obtains and stores an image of the lower area inside the battery.

The light-path guide unit 300 may be configured to split the incident light incident from the inspection object into first light and second light, guide the first light to the first lens module 110, and guide the second light to the second lens module 210.

To this end, the light-path guide unit 300 according to the present embodiment may include a beam splitter 320 and a reflective mirror 330. Here, the beam splitter 320 indicates an optical device that splits a light beam into two or more beams. In this embodiment, the beam splitter 320 may be configured to split incident light incident from the inspection object into first light and second light. That is, the first light is reflection light of the incident light, which is reflected from the beam splitter 320, and the second light is transmission light of the incident light, which passes through the beam splitter 320. For example, the beam splitter 320 may be configured to reflect approximately 50% of the incident light and transmit approximately 50% of the incident light.

The beam splitter 320 may be disposed vertically above the inspection object, and the second lens module 210 may be disposed vertically above the beam splitter 320. In this case, the second light may be incident directly on the second lens module 210. However, since the first light is reflected from the beam splitter 320 and heads in the horizontal direction (the -Y-axis direction), the light path must be changed toward the first lens module 110.

The reflective mirror 330 is a means for changing the light path of the first light, and may be disposed vertically below the first lens module 110 in order to guide the first light reflected from the beam splitter 320 to the first lens module 110.

According to this configuration, the light incident from the inspection object may be guided to the first lens module 110 and the second lens module 210 that are spaced apart from each other in the horizontal direction. In addition, for example, if the focus distance (or working distance) of the first lens module 110 is configured to be different from the focus distance of the second lens module 210, it is possible to simultaneously inspect different areas of one inspection object using the first lens module 110 and the second lens module 210.

The light-path guide unit 300 may be integrally coupled to the first lens module 110 and the second lens module 210.

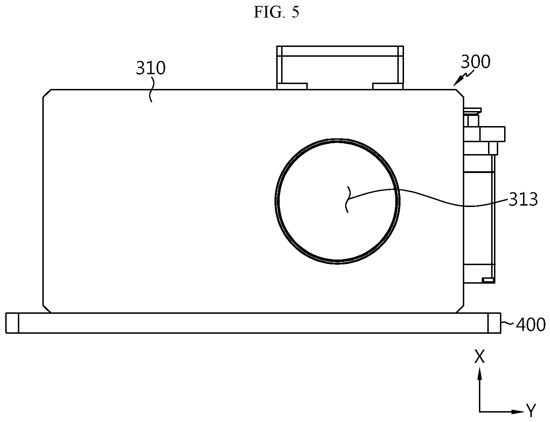

Specifically, referring to FIGS. 3 to 5, the light-path guide unit 300 may include a barrel 310, a first lens connection hole 311, a second lens connection hole 312, and a light entrance 313.

The barrel 310 may have a passage through which the first light and the second light pass and may be configured substantially in a box shape.

The first lens connection hole 311 and the second lens connection hole 312 may be provided on the top of the barrel 310, respectively, as shown in FIG. 3. The lower end of the first lens module 110 may be inserted and fixed into the first lens connection hole 311, and the lower end of the second lens module 210 may be inserted and fixed into the second lens connection hole 312.

In this case, as shown in FIG. 4, the lower lens of the first lens module 110 may face the inside of the barrel 310 through the first lens connection hole 311, and the lower lens of the second lens module 210 may face the inside of the barrel 310 through the second lens connection hole 312.

The light entrance 313 may be provided on the bottom of the barrel 310. Light incident from the inspection object may enter the barrel 310 through the light entrance 313. **In** addition, as will be described later, illumination light for illuminating the inspection object may pass from the inside of the barrel 310 to the outside through the light entrance 313.

**In** this embodiment, the beam splitter 320 and the reflective mirror 330 are disposed inside the passage S of the barrel 310. Specifically, the beam splitter 320 may be disposed vertically below the second lens connection hole 312, as shown in FIG. 4. **In** addition, the light entrance 313 may be located vertically below the beam splitter 320.

The beam splitter 320 may be configured in the form of a plate and assembled inside the passage of the barrel 310 such that the plate surface thereof forms an angle of about 45 degrees with the horizontal plane in a clockwise direction. Light incident through the light entrance 313 may be reflected and transmitted by the beam splitter 320. That is, in the case of the plate-shaped beam splitter 320 shown in FIG. 4, some of the light vertically entering the barrel 310 through the light entrance 313 may be reflected by the plate-shaped beam splitter 320 such that the light path thereof turns 90 degrees to the left along the horizontal direction, and the remaining light may pass through the plate-shaped beam splitter 320 and proceed straight toward the second lens connection hole 312. Here, among the two light beams split by the beam splitter 320, the light beam whose light path is changed by being reflected from the beam splitter 320 corresponds to the first light, and the light beam passing through the beam splitter 320 corresponds to the second light. Meanwhile, although the beam splitter 320 of this embodiment is of a plate type, the beam splitter 320 may be configured as a cube type.

The reflective mirror 330 may be spaced apart from the beam splitter 320 in the horizontal direction and disposed vertically below the first lens connection hole 311. In addition, the reflective mirror 330 may be assembled inside the passage of the barrel 310 so as to form an angle of about 45 degrees with the horizontal plane in the clockwise direction.

This reflective mirror 330 changes the travel direction of the first light, which is reflected from the beam splitter 320 and travels horizontally, to the vertical direction. Accordingly, the first light may be reflected from the reflective mirror 330 while changing its travel direction toward the first lens connection hole 311 and incident on the first lens module 110.

Meanwhile, the beam splitter 320 and the reflective mirror 330 may be provided to be inserted into and separated from the barrel 310.

For example, the light-path guide unit 300 according to this embodiment may include a mirror support 331 that supports and holds the reflective mirror 330, and a splitter support 321 that supports and holds the beam splitter 320, and may be configured to have a slot through which the mirror support 331 and the splitter support 321 are able to be inserted into the barrel 310, respectively, from the outside.

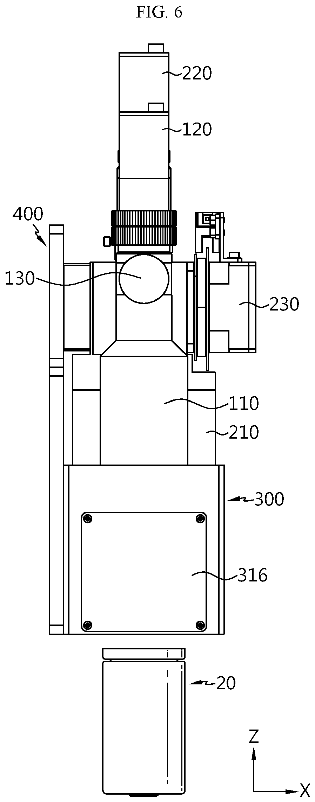

For example, as shown in FIG. 4, the barrel 310 may include a first insertion slot 315 into which the mirror support 331 is inserted on the left side. The mirror support 331 may be configured to be inserted into the barrel 310 from the outside through the first insertion slot 315. After the mirror support 331 is inserted into the barrel 310, the entrance of the first insertion slot 315 may be covered with a first slot cover plate 316, as shown in FIG. 6.

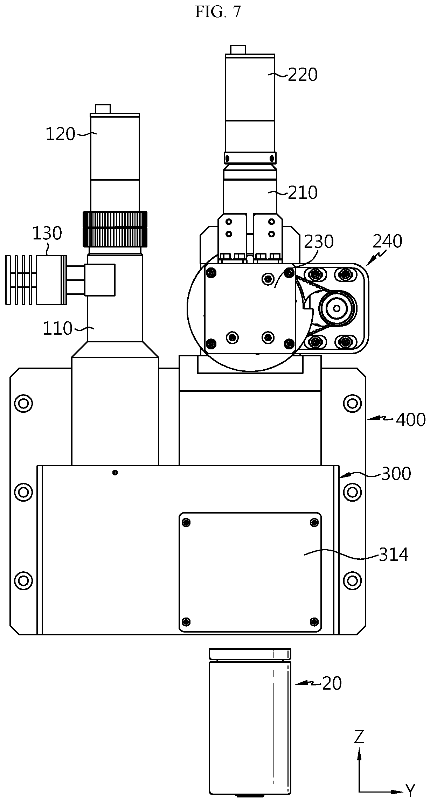

In addition, the barrel 310 may include a second insertion slot (not shown), into which the splitter support 321 is inserted, on the right front side. The second insertion slot may be formed from the front to the back of the barrel 310 (in the ±X-axis directions). The splitter support 321 may be configured to be inserted into the barrel 310 from the outside through the second insertion slot. After the splitter support 321 is inserted into the barrel 310, the entrance of the second insertion slot may be covered with a second slot cover plate 314, as shown in FIG. 7.

According to this configuration, the beam splitter 320 and the reflective mirror 330 may be easily disposed in or separated from the barrel 310. In addition, it may be easy to replace the reflective mirrors 330 or beam splitters 320 with different tilt angle, reflectance, and transmittance characteristics as needed.

Referring back to FIGS. 2 and 3, the battery inspection device according to an embodiment of the present disclosure may further include lighting equipment to obtain a bright image from the inspection object.

The upper inspection unit 100 may include a first lighting equipment 130, and the first lighting equipment 130 and the first lens module 110 may be configured to be assembled with each other. The first lens module 110 may be configured to include a lighting detachable portion 113, to which the first lighting equipment 130 may be mounted, on one side of barrel, so that the first lighting equipment 130 may be coupled thereto. In this embodiment, the first lighting equipment 130 may be coaxial projection lighting equipment.

The lower inspection unit 200 may include a second lighting equipment 230, and the second lighting equipment 230 and the second lens module 210 may be configured to be assembled with each other. The second lens module 210 may be configured to include a lighting connection hole, to which the second lighting equipment 230 may be mounted, on one side of the barrel, so that the second lighting equipment 230 may be coupled thereto. In this embodiment, the second lighting equipment 230 may be parallel-light lighting equipment.

In particular, the lower inspection unit 200 may further include an aperture controller 240 capable of controlling the amount of light entering the second lens module 210 from the second lighting equipment 230.

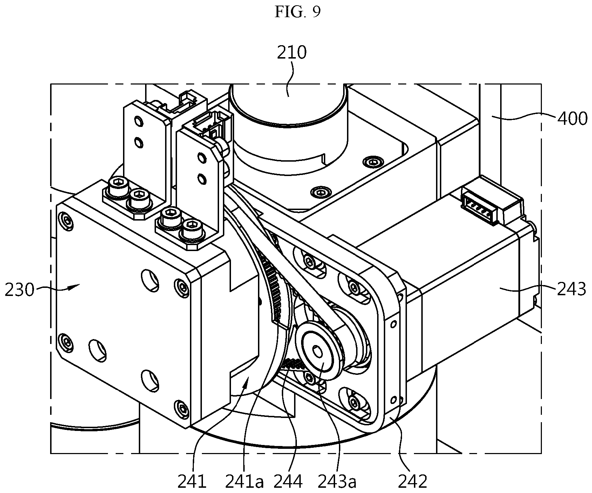

As shown in FIG. 9, the aperture controller 240 may include an aperture unit 241, a motor bracket 242, a drive motor 243, and a timing belt 244.

The aperture unit 241 may be mounted to the lighting connection hole (not shown) provided in the second lens module 210 for connection of the second lighting equipment 230, and may be configured such that a cogwheel 241a provided on the outer surface rotates clockwise or counterclockwise to gradually increase or reduce the diameter thereof, thereby adjusting the amount of light entering the lighting connection hole.

The motor bracket 242 is fixed to the second lens module 210 and may be configured in a plate shape on which the drive motor 243 may be assembled.

The drive motor 243 may include a main body fixed to the motor bracket 242 and a shaft 243a that rotates in the forward and reverse directions. The shaft 243a of the drive motor and the cogwheel 241a of the aperture unit may be connected by a timing belt 244.

As described above, the lower inspection unit 200 may include the aperture controller 240 to automatically adjust the amount of light, and may control the number of rotations of the drive motor 243, thereby precisely adjusting the amount of light.

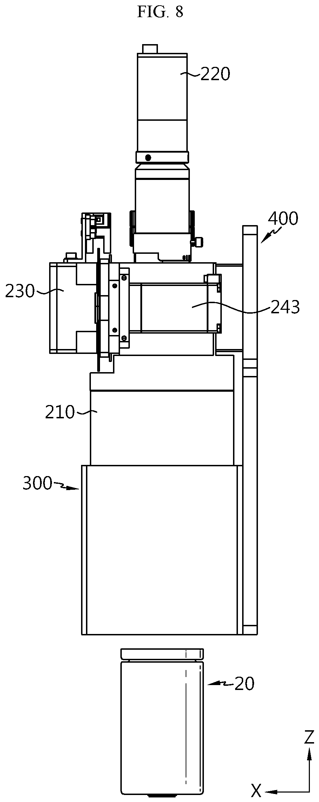

Meanwhile, the battery inspection device according to an embodiment of the present disclosure may further include a device bracket 400. Referring to FIGS. 2 to 3 and 8, the device bracket 400 may be coupled to the second lens module 210 and the light-path guide unit 300. This device bracket 400, although not shown, may be coupled to a transfer device (not shown) that is movable in 3-axis (X, Y, Z) directions. In this case, the battery inspection device may be moved up and down, left and right, and forward and backward relative to the inspection object.

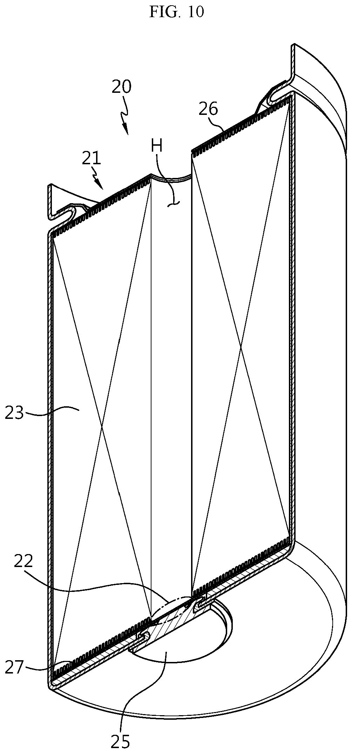

Next, an inspection process for the upper area 21 and lower area 22 of the cylindrical battery, which may be performed by the battery inspection device according to the present disclosure, will be briefly described with reference to FIGS. 10 to 12.

The cylindrical battery 20, which is the inspection object in this embodiment, is a tab-less cylindrical secondary battery, and has a central hole H at the center of the electrode assembly 23, as shown in FIG. 10. The central hole H formed at the center of the electrode assembly 23 corresponds to the portion where a winding rod (not shown), which had been used to wind the electrode assembly therearound, was removed. Welding may be performed between the positive electrode terminal 25 and the positive electrode collector 27 provided in the lower area inside the cylindrical battery. **In** this case, a welding rod may be inserted into the central hole H of the electrode assembly 23 or a laser beam may be radiated through the central hole H of the electrode assembly 23, thereby performing welding. **In** addition, the cylindrical battery 20 has a negative electrode collector 26 in the upper area. The edge of the negative electrode collector 26 may be welded to the inner surface of the battery can, and its lower surface may be welded to a negative electrode uncoated portion.

**In** this embodiment, the lower inspection unit 200 of the battery inspection device may inspect the lower area 22 inside the battery where the positive electrode terminal 25 and the positive electrode collector 27 are welded to each other. **In** addition, the upper inspection unit 100 of the battery inspection device may inspect the upper area 21 of the battery where the negative electrode collector 26 is assembled.

During the battery production process, the cylindrical battery 20 may be transported, for example, by a transport device such as a conveyor. The battery inspection device of the present disclosure may photograph, at high speed, the cylindrical battery 20 being transported during the battery production process, thereby obtaining an image of the inspection target area.

The upper inspection unit 100 of the battery inspection device photographs the upper area 21 of the cylindrical battery, and the lower inspection unit 200 photographs the lower area 22 inside the cylindrical battery. To this end, the first lens module 110 and the second lens module 210 may have different focus distances (working distances).

For example, in this embodiment, the first lens module 110 may be configured with a focus distance from its lower lens to the surface of the upper area 21 of the cylindrical battery to be viewed. **In** this case, a clear image of the upper area 21 of the cylindrical battery may be obtained using the first lens module 110. **In** addition, in this embodiment, the second lens module 210 may be configured with a focus distance from its lower lens to the surface of the lower area 22 inside the cylindrical battery to be viewed. **In** this case, a clear image of the lower area 22 inside the cylindrical battery may be obtained using the second lens module 210.

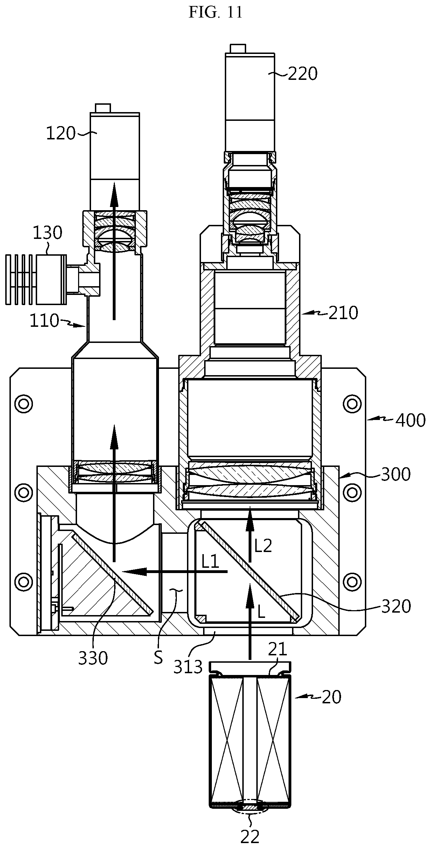

The battery inspection device is located to be spaced upward from the cylindrical battery 20 and photographs each cylindrical battery being transported, thereby performing inspection for defects. Specifically, when the cylindrical battery 20 being transported is located below the light entrance 313 of the light-path guide unit 300, the first lighting equipment 130 is turned on and the first camera 120 obtains an image of the upper area 21 of the cylindrical battery. At this time, as shown in FIG. 11, incident light L incident on the light entrance 313 from the upper area 21 of the cylindrical battery may be split into first light L1 and second light L2 by the beam splitter 320, so that the first light L1 may reach the image sensor of the first camera 120 through the reflective mirror 330 and the first lens module 110, thereby obtaining an image of the upper area 21 of the cylindrical battery.

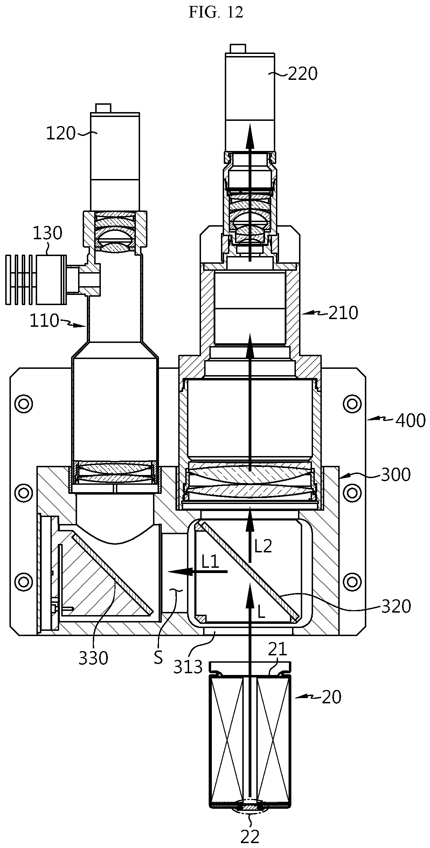

The second lighting equipment 230 of the lower inspection unit 200 may be turned on with a very short time difference from the first lighting equipment 130. When the second lighting equipment 230 is turned on, the first lighting equipment 130 may be turned off. When the second lighting equipment 230 is turned on, the second camera 220 obtains an image of the lower area 22 inside the cylindrical battery. At this time, as shown in FIG. 12, incident light L incident from the lower area 22 inside the cylindrical battery to the light entrance 313 may be split into first light L1 and second light L2 by the beam splitter 320, so that the second light L2 may reach the image sensor of the second camera 220 through the second lens module 210, thereby obtaining an image of the lower area 22 inside the cylindrical battery.

Since the photographing of the upper area 21 of the cylindrical battery by the upper inspection unit 100 and the photographing of the lower area 22 inside the cylindrical battery by the lower inspection unit 200 are performed very quickly, they actually take place almost simultaneously. Therefore, it is possible to obtain images of the upper area 21 and the lower area 22 of the cylindrical battery without stopping the production line in the battery production process and inspect the welding quality of corresponding areas or the like.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Meanwhile, although terms indicating directions such as upward, downward, left, right, forward, and backward directions are used in this specification, it is obvious to those skilled in the art that these terms are only for convenience of explanation and may vary depending on the location of the target object or the location of the observer.

## Claims

1. A battery inspection device comprising:
an upper inspection unit comprising a first lens module configured to condense first light and a first camera mounted on the top of the first lens module;
a lower inspection unit disposed horizontally to be spaced apart from the first lens module and comprising a second lens module configured to condense second light and a second camera mounted on the top of the second lens module; and
a light-path guide unit integrally coupled to the first lens module and the second lens module and configured to split incident light incident from an inspection object into the first light and the second light, guide the first light to the first lens module, and guide the second light to the first lens module.

2. The battery inspection device according to claim 1,
wherein the light-path guide unit comprises:
a beam splitter configured to split the incident light into the first light and the second light; and
a reflective mirror configured to refract the first light toward the first lens module.

3. The battery inspection device according to claim 2,
wherein the light-path guide unit comprises:
a barrel configured in the shape of a box and having a passage through which the first light and the second light pass;
a first lens connection hole provided on the top of the barrel and to which the first lens module is connected;
a second lens connection hole provided on the top of the barrel and to which the second lens module is connected; and
a light entrance provided on the bottom of the barrel and through which light enters and exits the barrel.

4. The battery inspection device according to claim 3,
wherein, inside the passage, the reflective mirror is disposed vertically below the first lens connection hole and the beam splitter is disposed vertically below the second lens connection hole, and
wherein the light entrance is provided vertically below the beam splitter.

5. The battery inspection device according to claim 3,
wherein the light-path guide unit comprises:
a mirror support configured to support and hold the reflective mirror;
a splitter support configured to support and hold the beam splitter; and
slots through which the mirror support and the splitter support are inserted into the barrel from the outside.

6. The battery inspection device according to claim 1,
wherein the second lens module comprises a telecentric lens.

7. The battery inspection device according to claim 1,
wherein the upper inspection unit comprises
a first lighting equipment coupled to the first lens module.

8. The battery inspection device according to claim 7,
wherein the first lighting equipment is coaxial projection lighting equipment.

9. The battery inspection device according to claim 1,
wherein the lower inspection unit comprises
a second lighting equipment coupled to the second lens module.

10. The battery inspection device according to claim 9,
wherein the second lighting equipment is parallel-light lighting equipment.

11. The battery inspection device according to claim 9,
wherein the lower inspection unit comprises
an aperture controller capable of controlling the amount of light entering the second lens module from the second lighting equipment.

12. The battery inspection device according to claim 11,
wherein the aperture controller comprises:
an aperture unit mounted to a lighting connection hole provided in the second lens module for connection of the second lighting equipment, and configured such that a cogwheel provided on the outer surface rotates clockwise or counterclockwise to gradually increase or reduce the diameter thereof, thereby adjusting the amount of light entering the lighting connection hole;
a motor bracket coupled to the outer side of the second lens module;
a drive motor fixed to the bracket; and
a timing belt connected to the drive motor and the cogwheel.
